# FASCICULE DE BREVET EUROPEEN

(11) **EP 1 885 789 B1**
(45) Date de publication et mention de la délivrance du brevet: **30.07.2014**
(21) Numéro de dépôt: 06755515.1
(22) Date de dépôt: 19.05.2006
(51) Int. Cl.: C08K 5/548, C07F 7/18

(54) **UTILISATION D'UNE COMBINAISON PARTICULIERE D'UN AGENT DE COUPLAGE ET D'UN AGENT DE RECOUVREMENT COMME SYSTEME DE COUPLAGE (CHARGE BLANCHE - ELASTOMERE) DANS LES COMPOSITIONS DE CAOUTCHOUC COMPRENANT UNE CHARGE INORGANIQUE**
VERWENDUNG EINER SPEZIELLEN KOMBINATION EINES HAFTVERMITTLERS UND EINES BESCHICHTUNGSMITTELS ALS HAFTVERMITTLUNGSSYSTEM (WEISSER FÜLLSTOFF/ELASTOMER) IN EINEN ANORGANISCHEN FÜLLSTOFF ENTHALTENDEN KAUTSCHUKZUSAMMENSETZUNGEN
USE OF A PARTICULAR COMBINATION OF A COUPLING AGENT AND A COATING AGENT AS COUPLING SYSTEM (WHITE FILLER/ELASTOMER) IN RUBBER COMPOSITIONS COMPRISING AN INORGANIC FILLER

(30) Priorité: 26.05.2005 FR 0505287
(43) Date de publication de la demande: 13.02.2008
(73) Titulaire: RHODIA CHIMIE, 93300 Aubervilliers (FR)
(72) Inventeur: GUY, Laurent, F-69003 Lyon (FR); FERNANDEZ, Michel, F-69009 Lyon (FR); STERIN, Sébastien, F-69450 Saint Cyr au Mont d'Or (FR)
(74) Mandataire: Delenne, Marc
(86) Numéro de dépôt international: PCT/FR2006/001144
(87) Numéro de publication internationale: WO 2006/125897

(56) Documents cités:
- FR-A- 2 839 720
- US-A- 4 118 367
- US-A1- 2003 114 601
- RUBBERCON 77 [SEVENTY-SEVEN], INT. RUBBER CONF. , VOLUME 1, PAPER NO. 18, 11 PP. PUBLISHER: PLAST. RUBBER INST., LONDON, ENGL. CODEN: 39BNAE, 1977, XP009060017

## Description

Le domaine de la présente invention est celui de l'utilisation d'une combinaison particulière d'un agent de couplage et d'un agent de recouvrement, comme système de couplage (charge blanche - élastomère) dans les compositions de caoutchouc comprenant une charge inorganique à titre de charge renforçante. L'invention concerne également les compositions d'élastomère(s) obtenues grâce à l'emploi dudit système de couplage, ainsi que les articles en élastomère(s) possédant un corps comprenant les compositions précitées.

Les types d'articles en élastomère(s) où l'invention est la plus utile sont ceux sujets notamment aux contraintes suivantes : des variations de températures et/ou des variations de sollicitation de fréquence importante en régime dynamique ; et/ou une contrainte statique importante ; et/ou une fatigue en flexion importante en régime dynamique. De tels types d'articles sont par exemple : des joints d'appareils électroménagers, des supports jouant le rôle d'extracteurs de vibrations de moteurs soit avec des armatures métalliques, soit avec un fluide hydraulique à l'intérieur de l'élastomère, des gaines de câbles, des semelles de chaussures et des galets pour téléphériques.

Ceci a été rendu possible notamment grâce à la mise au point de nouvelles compositions d'élastomères renforcées de charges inorganiques spécifiques qualifiées de "renforçantes", présentant une haute dispersibilité, capables de rivaliser avec le noir de carbone conventionnel du point de vue renforçant, et offrant en outre à ces compositions une hystérèse plus basse synonyme notamment d'une diminution de l'échauffement interne des articles en élastomère(s) (tels que par exemple ceux précités) lors de leur utilisation, en service.

La mise en oeuvre (ou "processabilité") des compositions de caoutchouc contenant de telles charges reste néanmoins plus difficile que pour les compositions de caoutchouc chargées conventionnellement de noir de carbone. En particulier, il est nécessaire d'utiliser un agent de couplage, encore appelé agent de liaison, qui a pour fonction d'assurer la connexion entre la surface des particules de charge inorganique et l'élastomère, tout en facilitant la dispersion de cette charge inorganique au sein de la matrice élastomérique.

Par agent de "couplage" (charge inorganique - élastomère), on rappelle ici que doit être entendu, de manière connue, un agent apte à établir une connexion suffisante, de nature chimique et/ou physique, entre la charge inorganique et l'élastomère.

Un tel agent de couplage, au moins bifonctionnel, a comme formule générale simplifiée « Y-W-X », dans laquelle :
- Y représente un groupe fonctionnel (fonction "Y") capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice) ;
- X représente un groupe fonctionnel (fonction "X") capable de se lier physiquement et/ou chimiquement à l'élastomère, par exemple par l'intermédiaire d'un atome ou d'un groupe d'atomes appropriés ;
- W représente un groupe divalent permettant de relier "Y" et "X".

Les agents de couplage ne doivent en particulier pas être confondus avec de simples agents de recouvrement de la charge inorganique qui, de manière connue, peuvent comporter la fonction "Y" active vis-à-vis de la charge inorganique mais sont en tout cas dépourvus de la fonction "X" active vis-à-vis de l'élastomère.

Des agents de couplage, notamment (silice - élastomère), ont été décrits dans un grand nombre de documents brevets, les plus connus étant des silanes sulfurés bifonctionnels, en particulier des alkoxysilanes sulfurés, considérés aujourd'hui comme les produits apportant, pour des vulcanisats chargés à la silice, le meilleur compromis en terme de sécurité au grillage, de facilité de mise en oeuvre et de pouvoir renforçant. Parmi ces silanes sulfurés, doit être cité tout particulièrement le tétrasulfure de bis 3-triéthoxysilylpropyle (en abrégé TESPT), agent de couplage de référence dans les compositions de caoutchouc comprenant une charge inorganique à titre de charge renforçante.

On cherche toujours aujourd'hui à améliorer les performances de ces agents de couplage pour une charge inorganique telle que par exemple la silice.

En particulier, le besoin est particulièrement présent dans le cas de matrices de caoutchouc à base d'un élastomère isoprénique dans lesquelles, de manière connue, une liaison efficace avec l'élastomère est beaucoup plus difficile à obtenir, comparativement à l'emploi de noir de carbone.

Ainsi, si l'on sait certes réduire l'hystérèse et donc notamment diminuer l'échauffement interne des articles en élastomère isoprénique lors de leur utilisation en remplaçant le noir de carbone par une charge inorganique telle que de la silice, ceci se fait malheureusement au détriment du renforcement de la matrice de caoutchouc. Tant et si bien que les silices sont encore peu utilisées dans les matrices d'élastomère isoprénique, comparativement au noir de carbone.

Or, le Demandeur a découvert un nouveau système de couplage charge inorganique - élastomère isoprénique qui permet de réconcilier, même dans des matrices de caoutchouc naturel, les deux objectifs contradictoires que sont l'amélioration de l'hystérèse et celle du renforcement. Plus précisément, un tel système permet donc non seulement de réduire encore l'hystérèse, comparativement à un agent de couplage conventionnel du type silane sulfuré, mais encore d'atteindre un niveau de renforcement au moins égal à celui disponible avec du noir de carbone.

### PREMIER OBJET DE L'INVENTION

Cet objectif, parmi d'autres, est atteint par la présente invention qui concerne, dans un premier objet, l'utilisation :
→ d'une quantité efficace d'un système (A) de couplage (charge inorganique-élastomère) comprenant un organosilane fonctionnalisé porteur d'au moins deux fonctions notées "X" ou "Y", greffable d'une part sur l'élastomère au moyen de la fonction "X" et d'autre part sur la charge inorganique au moyen de la fonction "Y" ;
→ comme agent de couplage charge inorganique - élastomère dans les compositions de caoutchouc comprenant :
   ◆ (B) au moins un élastomère de type caoutchouc, naturel ou synthétique ;
   ◆ (C) une charge inorganique à titre de charge renforçante ;
   ◆ (D) tout ou partie des autres constituants ou additifs choisis parmi : un (ou des) agent(s) de vulcanisation (D1), éventuellement un (ou des) accélérateur(s) de vulcanisation (D2), éventuellement un (ou des) activateur(s) de vulcanisation (D3), éventuellement une (ou des) charge(s) renforçante(s) non-blanche(s) (D4), éventuellement une (ou des) charge(s) inorganique(s) peu ou non renforçante(s) (D5), éventuellement un (ou des) agent(s) protecteur(s) (D6), éventuellement un (ou des) agent(s) de plastification (D7), et des mélanges de ces espèces ;
→ ladite utilisation étant caractérisée en ce que :
   + le système de couplage (A) consiste dans une association particulière résidant dans la combinaison des ingrédients (A1) et (A2) suivants :
      ◆ (A1) étant au moins un agent de couplage choisi parmi les produits de formule :

         - (C₂H₅O)₃Si-(CH₂)₃-NH-CO-N=N-COOC₂H₆ (A1-1)

         - les mélanges des espèces (A1-1) avec les espèces (A1-1') et (A1-1") suivantes :

         [(CH₃)₃SiO_{1/2}] [(C₂H₅O)₂{(CH₂)₃-NH-CO-N=N-COOC₂H₅}SiO_{1/2}] (A1-1')

         [(CH₃)₃SiO_{1/2}]₂ [(C₂H₅O){(CH₂)₃-NH-CO-N=N-COOC₂H₅}SiO_{2/2}] (A1-1")

         - (CH₃)₂(C₂H₅O)Si-(CH₂)₃-NH-CO-N=N-COOC₂H₅ (A1-2)

         - (CH₃)(CH₃O)₂Si-(CH₂)₃-NH-CO-N=N-COOCH₃ (A1-3)

         - (CH₃)₂(OH)Si-(CH₂)₃-NH-CO-N=N-COOCH₃ (A1-4)

         - (C₂H₅)₂(OH)Si-(CH₂)₃-NH-CO-N=N-COOC₂H₆ (A1-5)

         - (CH₃)(CH₃O)₂Si-(CH₂)₃-CO-N=N-COOCH₃ (A1-6)

         - (CH₃)₂(OH)Si-(CH₂)₃-CO-N=N-COOCH₃ (A1-7)

         - (C₂H₅)₂(OH)Si-(CH₂)₃-CO-N=N-COOC₂H₅ (A1-8)
      ◆ (A2) étant au moins un agent de recouvrement de la charge renforçante consistant dans un composé, comprenant dans sa structure la seule fonction "Y", qui est capable de se lier physiquement et/ou chimiquement à la charge inorganique et est susceptible, grâce à une amélioration de la dispersion de la charge dans la matrice de caoutchouc et à un abaissement de la viscosité des compositions, d'améliorer la faculté de mise en oeuvre des compositions à l'état cru ledit composé étant un polyorganosiloxane de formule : 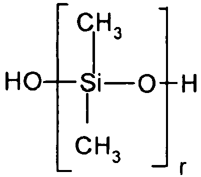 avec r ayant une valeur allant de 3 à 10 ;
   + ledit système de couplage (A) est incorporé dans des compositions de caoutchouc à base d'élastomères isopréniques.

L'homme du métier comprend que les agents de couplage (A1) précédemment décrits pourraient être préalablement greffés sur les charges inorganiques renforçantes, notamment sur de la silice, par l'intermédiaire de leur(s) fonction(s) "Y", les charges inorganiques renforçantes ainsi précouplées pouvant ensuite être liées à l'élastomère par l'intermédiaire de leur(s) fonction(s) libre(s) "X".

Les composés chimiques (A2) utilisés ici comme agents de recouvrement sont des produits connus dont la plupart sont des produits industriels aisément disponibles dans le commerce.

L'homme du métier comprend que tout ou partie du système de couplage précédemment décrit pourrait être préalablement greffé sur les charges inorganiques renforçantes, notamment sur de la silice, par l'intermédiaire de sa (ses) fonction(s) "Y", les charges inorganiques renforçantes ainsi précouplées pouvant ensuite être liées à l'élastomère par l'intermédiaire des fonctions libres "X". Tout ou partie du système de couplage pourrait être encore préalablement greffé sur l'élastomère isoprénique par l'intermédiaire des fonctions "X", l'élastomère ainsi fonctionnalisé pouvant ensuite être lié à la charge inorganique par l'intermédiaire des fonctions libres "Y". On préfère toutefois, notamment pour des raisons de meilleure mise en oeuvre des compositions de caoutchouc à l'état cru, utiliser tout ou partie du système de couplage soit greffé sur la charge, soit à l'état libre (c'est-à-dire non greffé).

### DEUXIEME OBJET DE L'INVENTION

Un deuxième objet de la présente invention concerne les compositions comprenant :
(B) au moins un élastomère isoprénique,
(C) une charge inorganique renforçante, et
(A) une quantité adéquate du système de couplage consistant dans l'association particulière, résidant dans la combinaison des ingrédients (A1) et (A2) indiqués ci-avant.
   Plus précisément, ces compositions comprennent (les parties étant données en poids) :
   - pour 100 parties d'élastomère(s) isopréniques(s),
   - de 10 à 200 parties de charge inorganique (C), de préférence de 30 à 150 parties et plus préférentiellement de 40 à 120 parties,
   - une quantité de combinaisons (A1) + (A2) qui apporte dans chaque composition :
      - 0,5 à 15 parties, et de préférence 1 à 10 parties, d'ingrédient (A1), et
      - 0,5 à 10 parties, et de préférence 0,8 à 8 parties, d'ingrédient (A2).

De manière avantageuse, la quantité de combinaison (A1) + (A2), où les proportions de ingrédients (A1) et (A2) sont choisies dans les zones générales et préférentielles précitées, est déterminée de manière à ce qu'elle représente de 1 à 20%, de préférence de 2 à 15%, plus préférentiellement de 3 à 10%, par rapport a poids de la charge inorganique renforçante.

De manière plus avantageuse, les proportions des ingrédients (A1) et (A2), d'une part choisies dans les zones générales et préférentielles précitées et d'autre part donnant une somme (A1) + (A2) avantageusement située dans les zones générales et préférentielles précitées, sont en plus déterminées de manière à ce que le rapport pondéral ingrédient (A1) / ingrédient (A2) se situe dans l'intervalle allant de 0,1 à 10, de préférence de 0,15 à 5 et plus préférentiellement de 0,3 à 3.

Nous allons revenir dans ce qui suit sur les définitions du composé (B) consistant dans au moins un élastomère isoprénique, et du composé (C) consistant dans une charge inorganique renforçante.

Par élastomères isopréniques qui sont mis en oeuvre pour les compositions conformes au deuxième objet de l'invention, on entend plus précisément :
(1) les polyisoprènes de synthèse obtenus par homopolymérisation de l'isoprène ou méthyl-2 butadiène-1,3 ;
(2) les polyisoprènes de synthèse obtenus par copolymérisation de l'isoprène avec un ou plusieurs monomères insaturés éthyléniquement choisis parmi :
   - (2.1) les monomères diènes conjuguées, autres que l'isoprène, ayant de 4 à 22 atomes de carbone, comme par exemple le butadiène-1,3, le diméthyl-2,3 butadiène-1,3, le chloro-2 butadiène-1,3 (ou chloroprène), le phényl-1 butadiène-1,3, le pentadiène-1,3, l'hexadiène-2,4 ;
   - (2.2) les monomères vinyles aromatiques ayant de 8 à 20 atomes de carbone, comme par exemple : le styrène, l'ortho-, méta- ou paraméthylstyrène, le mélange commercial "vinyl-toluène", le paratertiobutylstyrène, les méthoxystyrènes, les chlorostyrènes, le vinylmésitylène, le divinylbenzène, le vinylnaphtaléne ;
   - (2.3) les monomères nitriles vinyliques ayant de 3 à 12 atomes de carbone, comme par exemple l'acrylonitrile, le méthacrylonitrile ;
   - (2.4) les monomères esters acryliques dérivés de l'acide acrylique ou de l'acide méthacrylique avec des alcanols ayant de 1 à 12 atomes de carbone, comme par exemple l'acrylate de méthyle, l'acrylate d'éthyle, l'acrylate de propyle, l'acrylate de n-butyle, l'acrylate d'isobutyle, l'acrylate d'éthyl-2 hexyle, le méthacrylate de méthyle, le méthacrylate d'éthyle, le méthacrylate de n-butyle, le méthacrylate d'isobutyle ;
   - (2.5) un mélange de plusieurs des monomères précités (2.1) à (2.4) entre eux ; les polyisoprènes copolymères contenant entre 99 % et 20 % en poids d'unités isopréniques et entre 1 % et 80 % en poids d'unités diéniques, vinyles aromatiques, nitriles vinyliques et/ou esters acryliques, et consistant par exemple dans le poly(isoprène-butadiène), le poly(isoprène-styrène) et le poly(isoprène-butadiène-styrène) ;
(3) le caoutchouc naturel ;
(4) les copolymères obtenus par copolymérisation d'isobutène et d'isoprène (caoutchouc butyle), ainsi que les versions halogénées, en particulier chlorées ou bromée, de ces copolymères ;
(5) un mélange de plusieurs des élastomères précités (1) à (4) entre eux ;
(6) un mélange contenant une quantité majoritaire (allant de 51 % à 99,5 % et, de préférence, de 70 % à 99 % en poids) d'élastomère précité (1) ou (3) et une quantité minoritaire (allant de 49 % à 0,5 % et, de préférence, de 30 % à 1 % en poids) d'un ou plusieurs élastomères diéniques autres qu'isopréniques.

Par élastomère diénique autre qu'isoprénique, on entend de manière connue en soi : les homopolymères obtenus par polymérisation d'un des monomères diènes conjugués définis ci-avant au point (2.1), comme par exemple le polybutadiène et le polychloroprène ; les copolymères obtenus par copolymérisation d'au moins deux des diènes conjugués précités (2.1) entre eux ou par copolymérisation d'un ou plusieurs des diènes conjugués précités (2.1) avec un ou plusieurs monomères insaturés précités (2.2), (2.3) et/ou (2.4), comme par exemple le poly(butadiène-styrène) et le poly(butadiène-acrylonitrile) ; les copolymères ternaires obtenus par copolymérisation d'éthylène, d'une α-oléfine ayant de 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène 1,4, l'héthylidène-norbomène, le dicyclopentadiène (élastomère EPDM).

A titre préférentiel, on fait appel à un ou plusieurs élastomères isopréniques choisis parmi : (1) les polyisoprènes de synthèse homopolymères ; (2) les polyisoprènes de synthèse copolymères consistant dans le poly(isoprène-butadiène), le poly(isoprène-styrène) et le poly(isoprène-butadiène-styrène) ; (3) le caoutchouc naturel ; (4) le caoutchouc butyle ; (5) un mélange des élastomères précités (1) à (4) entre eux ; (6) un mélange contenant une quantité majoritaire d'élastomère précité (1) ou (3) et une quantité minoritaire d'élastomère diénique autre qu'isoprénique consistant dans le polybutadiène, le polychloroprène, le poly(butadiène-styrène), le poly(butadiène-acrylonitrile) et un terpolymère (éthylène-propylène-diène monomère non conjugué).

A titre plus préférentiel, on fait appel à un ou plusieurs élastomères isopréniques choisis parmi : (1) les polyisoprènes de synthèse homopolymères ; (3) le caoutchouc naturel ; (5) un mélange des élastomères précités (1) et (3) ; (6) un mélange contenant une quantité majoritaire d'élastomère précité (1) ou (3) et une quantité minoritaire d'élastomère diénique autre qu'isoprénique consistant dans le polybutadiène et le poly(butadiène-styrène).

Dans le présent exposé, on entend par "charge inorganique renforçante", de manière connue, une charge inorganique ou minérale, quelles que soient sa couleur et son origine (naturelle ou de synthèse), encore appelée charge "blanche" ou parfois charge "claire" par opposition au noir de carbone. L'expression "charge inorganique renforçante" englobe encore dans sa définition des charges mixtes à base de charge "blanche" et de noir de carbone. Cette charge inorganique doit être capable de renforcer à elle seule, sans autre moyen qu'un agent de couplage intermédiaire, une composition de caoutchouc technique, en d'autres termes capable de remplacer, dans sa fonction de renforcement, une charge conventionnelle à base seulement de noir de carbone.

L'état physique sous lequel se présente la charge inorganique renforçante est indifférent, c'est-à-dire que ladite charge peut se présenter sous forme de poudre, de granulés ou de billes (microperles).

De manière préférentielle, la charge inorganique renforçante ou composé (C) consiste dans de la silice, de l'alumine, du noir de carbone recouvert totalement ou partiellement par de la silice et/ou de l'alumine ou un mélange de ces espèces.

De manière plus préférentielle, la charge inorganique renforçante consiste dans de la silice, prise seule ou en mélange avec de l'alumine.

A titre de silice susceptible d'être mise en oeuvre dans l'invention conviennent toutes les silices précipitées ou les silices pyrogénées (silices de combustion) connues de l'homme de l'art présentant, de préférence, une surface spécifique BET inférieure ou égale à 450 m²/g. On préfère les silices précipitées, celles-ci pouvant être classiques ou hautement dispersibles.

Par silice hautement dispersible, on entend toute silice ayant une aptitude à la désagglomération et à la dispersion dans une matrice polymérique très importante observable par microscopie électronique ou optique, sur coupes fines. Parmi les silices précipitées hautement dispersibles on peut utiliser par exemple celles ayant une surface spécifique CTAB égale ou inférieure à 450 m²/g, de préférence comprise entre 30 et 400 m²/g, et en particulier celles décrites dans le brevet US-A-5403570 et les demandes WO-A-95/09127 et WO-A-95/09128 dont le contenu est incorporé ici. Comme exemples non limitatifs de telles silices très dispersibles préférentielles, on peut citer les silices Zeosil 1165 MP et 1115 MP de la société RHODIA, les silices BV3380 et Ultrasil 7000 de la société DEGUSSA, la silice Perkasil KS 430 de la société AKZO, les silices Hi-Sil 2000 et Hi-Sil EZ 150G de la société PPG, les silices Zeopol 8715, 8741, 8745 ou 8755 de la société HUBER. Conviennent aussi les silices précipitées traitées telles que par exemple les silices "dopées" à l'aluminium décrites dans la demande de brevet EP-A-0735088 dont le contenu est également incorporé ici.

A titre plus préférentiel, conviennent bien les silices de précipitation ayant :
- une surface spécifique CTAB de 60 à 250 m²/g, de préférence de 80 à 230 m²/g,
- une surface spécifique BET de 60 à 260 m²/g, de préférence de 80 à 240 m²/g,
- un rapport surface spécifique BET / surface spécifique CTAB de 1,0 à 1,6.

Bien entendu, par silice, on entend également des coupages de différentes silices. La surface spécifique CTAB est déterminée selon la méthode NFT 45007 de novembre 1987. La surface spécifique BET est déterminée selon la méthode de BRUNAUER, EMMETT, TELLER décrite dans "The Journal of the American Chemical Society, vol. 60, page 309 (1938)" correspondant à la norme NF ISO 9277 de décembre 1996..

A titre d'alumine renforçante, on utilise avantageusement une alumine hautement dispersible ayant :
- une surface spécifique BET de 30 à 400 m²/g, de préférence de 60 à 250 m²/g,
- une taille moyenne de particules d'au plus 500 nm, de préférence d'au plus 200 nm, et
- un taux élevé de fonctions réactives de surface AI-OH,
par exemple telle que décrite dans le document EP-A-0810258.

Comme exemples non limitatifs de telles alumines renforçantes, on peut citer notamment les alumines A125, CR125, D65CR de la société BAIKOWSKI.

A titre de noirs de carbone recouverts totalement ou partiellement par une charge "blanche", on citera notamment les produits de la gamme ECOBLACK de la société CABOT, et en particulier le produit référencé CRX 2000.

A titre d'autres exemples de charge inorganique susceptible d'être utilisée dans les compositions de caoutchouc de l'invention peuvent être encore cités des (oxyde-) hydroxydes d'aluminium, des aluminosilicates, des oxydes de titane, des carbures ou nitrures de silicium, tous du type renforçants tels que décrits par exemple dans les demandes WO-A-99/28376, WO-A-00/73372, WO-A-02/053634, WO-A-2004/003067, WO-A-2004/056915.

Les compositions conformes à l'invention contiennent en outre un ingrédient (D) comprenant tout ou partie des autres constituants et additifs auxiliaires habituellement utilisés dans le domaine des compositions d'élastomère(s) et de caoutchouc(s).

Ainsi, on peut mettre en oeuvre tout ou partie des autres constituants et additifs suivants :
■ s'agissant du système de vulcanisation, on peut citer par exemple :
   - (D1) : à titre obligatoire, des agents de vulcanisation choisis parmi le soufre ou des composés donneurs de soufre, comme par exemple des dérivés de thiurame ; s'agissant par exemple du soufre, il est utilisé de manière connue à un taux allant de 0,5 à 10 et de préférence de 0,5 à 5 parties en poids pour 100 parties en poids d'élastomère(s) isoprénique(s) ;
   - (D2) : à titre facultatif, des accélérateurs de vulcanisation, comme par exemple des dérivés de guanidine et des dérivés de sulfénamide ; un tel activateur, quand on en utilise un, est employé de manière connue à un taux allant de 0,5 à 10 et de préférence de 0,5 à 5 parties en poids pour 100 parties en poids d'élastomère(s) ;
   - (D3) : à titre facultatif, des activateurs de vulcanisation, comme par exemple l'oxyde de zinc, l'acide stéarique et le stéarate de zinc ;
■ s'agissant d'autre(s) additif(s), on peut citer par exemple :
   - (D4) : à titre facultatif, une charge renforçante conventionnelle consistant dans le noir de carbone ; comme noirs de carbone conviennent tous les noirs de carbone, notamment les noirs du type HAF, ISAF, SAF ; à titre d'exemples non limitatifs de tels noirs de carbone, on peut citer les noirs de carbone N115, N134, N234, N339, N347, N375 ; la quantité de noir de carbone est déterminée de manière à ce que d'une part la charge inorganique renforçante mise en oeuvre représente plus de 50 % du poids de l'ensemble charge inorganique + noir de carbone, et d'autre part la quantité de charge renforçante totale (charge inorganique + noir de carbone) reste dans les intervalles de valeurs indiqués supra, pour la charge inorganique renforçante, à propos de la constitution pondérale des compositions ;
   - (D5) : à titre facultatif, une charge blanche conventionnelle peu ou non renforçante comme par exemple des argiles, la bentonite, le talc, la craie, le kaolin, le dioxyde de titane ou un mélange de ces espèces ;
   - (D6) : à titre facultatif, des agents protecteurs, comme par exemple des agents antioxydants et/ou des agents antiozonants, comme par exemple la N-phényl-N'-(diméthyl-1,3 butyl)-p-phénylène-diamine ;
   - (D7) : à titre facultatif, des agents de plastification.

### TROISIEME OBJET DE L'INVENTION

Un troisième objet de la présente invention concerne le procédé de préparation des compositions d'élastomère(s) comprenant une charge inorganique renforçante et une quantité efficace du système de couplage. Ce procédé peut se faire selon un mode opératoire classique en deux phases 1 et 2 dans lesquelles :
- phase 1 (dite étape non-productive "à chaud") : on introduit et malaxe dans un mélangeur interne usuel, en une ou deux étapes ou plus de deux étapes, tous les ingrédients nécessaires, à l'exception en général du (ou des) agent(s) de vulcanisation (D1) ; à titre illustratif, on peut ainsi introduire et malaxer tous les ingrédients ci-après définis : élastomère(s) (B), charge inorganique (C), tout ou partie de l'agent de recouvrement (A2), éventuellement tout ou partie de l'agent de couplage (A1), éventuellement un (ou des) accélérateur(s) de vulcanisation (D2), éventuellement un (ou des) activateur(s) de vulcanisation (D3), éventuellement un (ou des) agent(s) protecteur(s) (D6), éventuellement une (ou des) charge(s) renforçante(s) non-blanche(s) (D4), éventuellement une (ou des) charge(s) blanche(s) peu ou non renforçante(s) (D5), éventuellement un (ou des) agent(s) de plastification (D7) ; on opère à une température comprise entre 40 et 200°C, de préférence entre 60 et 180°C ; une ou plusieurs étape(s) ultérieure(s) de travail thermomécanique peut (peuvent) être réalisée(s) dans le mélangeur interne, après tombée du mélange et refroidissement intermédiaire (température de refroidissement de préférence inférieure à 100°C), dans le but de faire subir aux compositions un traitement thermomécanique complémentaire, notamment pour améliorer encore la dispersion dans la matrice élastomérique de la charge inorganique renforçante et des agents de couplage ; au cours de pareille(s) étape(s) ulétieure(s), il est possible d'introduire l'un et/ou l'autre des ingrédients nécessaires évoqués ci-avant ;
- phase 2 (dite phase productive "à froid") : puis le mélange ainsi obtenu est repris sur un mélangeur externe et on y ajoute alors le (ou les) agent(s) de vulcanisation et éventuellement un ou plusieurs autre(s) ingrédient(s) ; à titre illustratif, on ajoute ainsi les ingrédients suivants : éventuellement la totalité ou le reste d'agent de couplage (A1), éventuellement le reste d'agent de recouvrement (A2), un (ou des) agent(s) de vulcanisation (D1), éventuellement un (ou des) accélérateur(s) de vulcanisation (D2), éventuellement un (ou des) activateur(s) de vulcanisation (D3), éventuellement un (ou des) agent(s) protecteur(s) (D6) ; on opère à une température plus basse, inférieure à 120°C, et de préférence de 25 à 100°C.

Selon une première modalité préférentielle, le procédé de préparation des compositions d'élastomère(s) se fait selon le mode opératoire classique en deux phases 1 et 2 dans lequel :
- l'agent de recouvrement (A2) est introduit en totalité au cours de la phase 1 en même temps que la charge inorganique ;
- tandis que l'agent de couplage (A1) est :
   - soit introduit en totalité au cours de la phase 1,
   - soit introduit en totalité au cours de la phase 2,
   - soit fractionné entre les deux phases 1 et 2, la première fraction incorporée en phase 1 correspondant à une proportion de 10 à 80% en poids, la seconde fraction incorporée en phase 2 correspondant à une proportion de 90 à 20% en poids.

Il convient de noter qu'il est possible d'introduire tout ou partie du système de couplage sous forme supportée (la mise sur support étant réalisée au préalable) sur un solide compatible avec les structures chimiques présentes dans ledit système de couplage ; un tel support consiste notamment dans le noir de carbone. Par exemple, lors du fractionnement de l'agent de couplage (A1) sur les deux phases 1 et 2, il peut être avantageux d'introduire l'agent de couplage sur le mélangeur externe de la phase 2 après une mise sur support dudit agent afin de faciliter son incorporation et sa dispersion.

La composition finale obtenue est ensuite calandrée par exemple sous la forme d'une feuille, d'une plaque ou encore d'un profilé utilisable pour la fabrication d'articles en élastomère(s).

La vulcanisation (ou cuisson) est conduite de manière connue à une température allant généralement de 130 à 200°C, pendant un temps suffisant qui peut varier par exemple entre 5 et 90 minutes en fonction notamment de la température de cuisson, du système de vulcanisation adopté et de la cinétique de vulcanisation de la composition considérée.

Il va de soi que la présente invention, prise dans son deuxième objet, concerne les compositions d'élastomère(s) précédemment décrites tant à l'état cru (c'est-à-dire avant cuisson) qu'à l'état cuit (c'est-à-dire après réticulation ou vulcanisation).

### QUATRIEME OBJET DE L'INVENTION

Un quatrième objet de la présente invention concerne les articles en élastomère(s) isoprénique(s) possédant un corps comprenant les compositions décrites ci-avant dans le cadre du deuxième objet de l'invention. La présente invention est particulièrement utile pour préparer des articles consistant par exemple dans des supports de moteurs, des semelles de chaussures, des galets de téléphériques, des joints d'appareillages électroménagers et des gaines de câbles.

Les exemples suivants illustrent la présente invention.

### EXEMPLE 1

Cet exemple illustre la préparation d'un agent de couplage de type (A1). Nous avons suivi le schéma réactionnel suivant :

(C₂H₅O)₃Si-(CH₂)₃-NCO + H₂N-NH-COOC₂H₅ (C₂H₅O)₃Si-(CH₂)₃-NH-CO-NH-NH-COOC₂H₅

### 1) Synthèse de l'ingrédient précurseur :

### 1.1) Charges

| | | |
|---|---|---|
| Isocyanatopropyltriéthoxysilane à 96% | 99,8 g | 384 mmol |
| Carbazate d'éthyle | 41,2 g | 384 mmol |
| Toluène Anhydre | 384 ml | - |

### 1.2) Protocole opératoire

Le carbazate d'éthyle et le toluène anhydre sont chargés à température ambiante (23°C) dans le réacteur qui est mis sous atmosphère d'argon.

Le réacteur est mis sous agitation à 300 tours/minute et le mélange réactionnel est ensuite chauffé à 60°C. Le mélange réactionnel devient pratiquement homogène à chaud.

Les 99,8 g de silane sont ensuite additionnés en 60 minutes à l'aide d'une ampoule de coulée isobare.

Le mélange réactionnel est maintenu 2 heures sous agitation à 60°C avant retour à température ambiante.

Le mélange réactionnel est laissé au repos quelques heures à température ambiante.

Un solide blanc cristallise. Il est ensuite filtré, lavé par 2 fois 150 ml d'éther isopropylique puis essoré sous vide. Le solide est finalement mis à séché à l'étuve à 60°C jusqu'à poids constant m = 131,5 g.

Le produit est analysé par RMN (pureté molaire > 99%). Rendement = 97,4%.

### 2) Synthèse de l'ingrédient (A1-1) :

L'ingrédient (A1-1) est obtenu en une étape à partir du précurseur par oxydation de la fonction hydrazino en fonction azo utilisant un système oxydant à base de N-Bromosuccinimide (NBS) et de pyridine ajoutés en quantités stoechiométriques par rapport au précurseur.

### 2.1) Charges :

| | | |
|---|---|---|
| Précurseur | 20,0 g | 57 mmol |
| N-Bromosuccinimide 99% | 10,13 g | 57 mmol |
| Pyridine | 4,5 g | 57 mmol |
| Dichlorométhane | 100 ml | - |

### 2.2) Protocole opératoire :

Le précurseur, la pyridine et le dichlorométhane sont chargés dans un réacteur qui est mis sous atmosphère d'argon ; le milieu réactionnel est homogène pratiquement incolore.

Le N-Bromosuccinimide est ajouté en 30 minutes à la spatule. La température est maintenue inférieure à 25°C. Dès le premier ajout de NBS, le milieu réactionnel devient orange vif.

Le milieu réactionnel est maintenu sous agitation à température ambiante pendant 2 heures après la fin de l'addition du NBS.

Le milieu réactionnel est concentré sous pression réduite à l'évaporateur rotatif.

Le résidu, qui se présente sous la forme d'une pâte orangée, est repris par 100 ml d'un mélange heptane/iPr₂O (1/1 : vol/vol) puis filtré sur verre fritté (125 ml) de porosité 4. Le gâteau de filtration est lavé par 4 fois 25 ml supplémentaires du mélange de solvant précédent.

Les eaux-mères sont filtrées une seconde fois sur le gâteau. Le filtrat est concentré sous pression réduite.

Un liquide orange vif inodore est obtenu : m = 18,8 g. Ce liquide est analysé par RMN ; sa composition molaire est la suivante : ingrédient (A1-1) 94,5% en mole ; composé précurseur : 0,2% en mole ; succinimide : 5% en mole et résidus pyridiniques : 0,3%.

### EXEMPLE 2

Cet exemple a pour but de démontrer les performances de couplage (charge blanche-élastomère) d'une association particulière résidant dans la combinaison :
- d'une ingrédient (A1) consistant essentiellement dans l'organosilane de formule :

   (C₂H₅O)₃Si-(CH₂)₃-NH-CO-N=N-COOC₂H₅ (A1-1)
- et d'un ingrédient (A2) consistant dans l'agent de recouvrement à base polyéthylèneglycol.

Ces performances sont comparées d'une part à celle d'une composition de caoutchouc témoin renforcée avec du noir de carbone et d'autre part à celle d'une autre composition témoin renforcée avec une charge siliceuse et renfermant uniquement un agent de couplage conventionnel à base du silane TESPT :

(C₂H₅O)₃Si-(CH₂)₃-S₄-(CH₂)₃-Si(OC₂H₅)₃

On compare 4 compositions d'élastomères représentatives de formulation de semelles de chaussure. Ces 4 compositions sont identiques aux différences près suivantes :
- composition n° 1 (témoin 1) : renforcée avec de la silice et ne comprenant ni agent de couplage, ni agent de recouvrement ;
- composition n° 2 (témoin 2) : renforcée avec du noir de carbone ;
- composition n° 3 (témoin 3) : renforcée avec de la silice et comprenant un agent de couplage qui apporte à la composition 4 pce de silane TESPT ;
- composition n° 4 (exemple 2) : combinaison d'un agent de couplage apportant dans la composition 3,8 pce de silanes (A1-1), introduit en totalité en mélangeur interne et d'un agent de recouvrement (A2) introduit également en totalité en mélangeur interne.

### 1) Constitution des compositions d'élastomères :

Dans un mélangeur interne de type BRABENDER sont préparées les compositions dont la constitution, exprimée en partie en poids pour 100 parties d'élastomères (pce), est indiquée dans le tableau 1 donné ci-après :

**Tableau I**

| Composition | Témoin 1 | Témoin 2 | Témoin 3 | Exemple 2 |
|---|---|---|---|---|
| NR (1) | 80 | 80 | 80 | 80 |
| BR (2) | 20 | 20 | 20 | 20 |
| Silice (3) | 50 | - | 50 | 50 |
| Noir de carbone (N234) | - | 45 | - | - |
| Agent de couplage 1 (4) | - | - | 4,0 | - |
| Agent de couplage 2 (5) | - | - | - | 3,8 |
| Agent de recouvrement (6) | - | - | - | 1,0 |
| ZnO - 80% | 3,75 | 3,75 | 3,75 | 3,75 |
| Acide stéarique | 2,5 | 2,5 | 2,5 | 2,5 |
| Antioxydant (7) | 1,9 | 1,9 | 1,9 | 1,9 |
| Agent de couplage 2 (5) | - | - | - | - |
| CBS - 80% (8) | 1,88 | 1,88 | 1,88 | 1,88 |
| TBzTD (9) | 0,2 | 0,2 | 0,2 | 0,2 |
| Soufre - 80% | 1,88 | 1,88 | 1,88 | 1,88 |
| Noir de carbone (N330) | 4,0 | 4,0 | 4,0 | 4,0 |

### Légende :

(1) Caoutchouc naturel SMR - CV60 (fourni par la société Safic-Alcan).
(2) Polybutadiène ou BR (Buna CB24 de la société Bayer) avec 96% min de cis 1-4 et préparé par catalyse au Néodyme.
(3) Silice (Z1165 MP de la société Rhodia) avec surfaces BET et CTAB voisines de 150-160 m²/g.
(4) TESPT (Silquest A1289 de la société GE-Osi).
(5) [(3-triéthoxysilyl-propyl)-amino]carbonyldiazenecarboxylate d'éthyle (synthétisé selon le mode opératoire décrit dans l'exemple 1).
(6) Huile polydiméthylsiloxane hydroxylée bloquée à chacune des extrémtés de chaînes par un motif diméthylhydroxysilyle ayant une viscosité de 50 mPa.s à 25°C.
(7) N-1,3-diméthylbutyl-N-phényl-para-phénylènediamine (Santoflex 6-PPD de la société Flexsys).
(8) N-cyclohexyl-2-benzothiazyl-sulfénamide (Rhénogran CBS-80 de la société Bayer).
(9) Disulfure de tétrabenzylthiurame (Perkacit TBzTD de la société Flexsys).

Les agents de couplage sont utilisés à un taux isomolaire en silicium, c'est-à-dire que l'on utilise, quelle que soit la composition, le même nombre de moles de fonctions "Y" ici ["Y" = Si(OC₂H₅)₃] réactives vis-à-vis de la silice et de ses groupes hydroxyles de surface.

### 2) Préparation des compositions d'élastomères :

Le procédé de préparation des compositions d'élastomères est conduit en deux phases de préparation successives. Une première phase consiste dans une phase de travail thermomécanique à haute température. Elle est suivie d'une seconde phase de travail mécanique à des températures inférieures à 110°C. Cette phase permet l'introduction du système de vulcanisation.

La première phase est réalisée au moyen d'un appareil de mélangeage, type mélangeur interne de marque BRABENDER (capacité de 70 ml). Le coefficient de remplissage est de 0,75. La température initiale et la vitesse des rotors sont fixées à chaque fois de manière à atteindre des températures de tombée de mélange voisines de 140-160°C.

Elle permet d'incorporer les élastomères, puis la charge renforçante (introduction fractionnée) avec tout ou partie du système de couplage, puis les divers activateurs de vulcanisation (acide stéarique, oxyde de zinc) et l'agent protecteur (6-PPD). Pour cette phase, la durée est comprise entre 5 et 10 minutes.

Après refroidissement du mélange (température inférieure à 100°C), la seconde phase permet l'introduction du système de vulcanisation (soufre et accélérateurs) et éventuellement le reste du système de couplage et éventuellement une charge renforçante conventionnelle (noir de carbone). Elle est réalisée sur un mélangeur à cylindres, préchauffé à 50°C. La durée de cette phase est comprise entre 2 et 6 minutes.

La composition finale est ensuite calandrée sous la forme de plaques d'épaisseur 2-3 mm.

Sur ces mélanges dits crus, une évaluation de leurs propriétés rhéologiques permet d'optimiser la durée et la température de vulcanisation.

Ensuite, les propriétés mécaniques et dynamiques des mélanges vulcanisés à l'optimum sont mesurées.

### 3) Rhéométrie des compositions :

Les mesures sont réalisées sur les compositions à l'état cru. On a porté dans le tableau II les résultats concernant le test de rhéologie qui est conduit à 150°C au moyen d'un rhéomètre ODR MONSANTO 100 S selon la norme DIN 53529.

Selon ce test, la composition à tester est placée dans la chambre d'essai régulée à la température de 150°C durant 30 minutes, et on mesure le couple résistant, opposé par la composition, à une oscillation de faible amplitude (3°) d'un rotor biconique inclus dans la chambre d'essai, la composition remplissant complètement la chambre considérée.

A partir de la courbe de variation du couple en fonction du temps, on détermine :
- le couple minimum (Cm) qui reflète la viscosité de la composition à la température considérée ;
- le couple maximum (CM) ;
- le delta-couple (ΔC = CM - Cm) qui reflète le taux de réticulation entraîné par l'action du système de réticulation et, s'il y a lieu, des agents de couplage ;
- le temps T98 nécessaire pour obtenir un état de vulcanisation correspondant à 98 % de la vulcanisation complète (ce temps est pris comme optimum de vulcanisation) ;
- et le temps de grillage TS2 correspondant au temps nécessaire pour avoir une remontée de 2 points au dessus du couple minimum à la température considérée (150°C) et qui reflète le temps pendant lequel il est possible de mettre en oeuvre les mélanges crus à cette température sans avoir d'initiation de la vulcanisation.

Les résultats obtenus sont indiqués dans le tableau II.

**Tableau II**

| Référence | Témoin 1 | Témoin 2 | Témoin 3 | Exemple 2 |
|---|---|---|---|---|
| Cm (dN.m) | 20,5 | 13,6 | 15,5 | 25,3 |
| CM (dN.m) | 74,5 | 86,4 | 82,9 | 91,7 |
| Delta couple (dN.m) | 54 | 72,8 | 67,4 | 66,4 |
| TS 2 (min) | 6,27 | 4,13 | 7,92 | 8,05 |
| T98 (min) | 11,52 | 9,56 | 16,20 | 11,45 |
| Vret max (dN.m/min) | 11,40 | 24,26 | 10,84 | 21,47 |

### 4) Propriétés mécaniques des vulcanisats :

Les mesures sont réalisées sur les compositions vulcanisées à l'optimum (T98) pour une température de 150°C.

Les essais de traction uniaxiale sont réalisés conformément aux indications de la norme NF T 46-002 avec des éprouvettes de type H2 à une vitesse de 500 mm/min sur un appareil INSTRON 5564. Les modules 10 %, 100 %, 300 %, et la résistance à la rupture sont exprimés en MPa ; l'allongement à la rupture est exprimé en %. Il est possible de déterminer un indice de renforcement à partir du rapport entre les modules à 300 % et le module à 100 % de déformation.

La mesure de dureté Shore A des vulcanisats est réalisée selon les indications de la norme ASTM D 2240. La valeur donnée est mesurée à 15 secondes.

La mesure de perte de masse par abrasion est réalisée selon les indications de la norme DIN 53516 qui utilise un abrasimètre Zwick où l'éprouvette cylindrique est soumise à l'action d'une toile abrasive de grains P60 et fixée sur la surface d'un tambour tournant sous une pression de contact de 10N et pour une course de 40 mètres.

La valeur mesurée est un volume de perte de substance (en mm³) après usure par abrasion ; plus elle est faible et meilleure est la résistance à l'abrasion.

Les propriétés mesurées sont rassemblés dans le tableau III.

**Tableau III**

| Référence | Témoin 1 | Témoin 2 | Témoin 3 | Exemple 2 |
|---|---|---|---|---|
| Module 10 (Mpa) | 0,84 | 0,95 | 0,9 | 0,87 |
| Module 100 (Mpa) | 1,49 | 3,5 | 3,21 | 3,75 |
| Module 200 (Mpa) | 2,64 | 9,1 | 7,8 | 11,68 |
| Module 300 (Mpa) | 4,62 | 16,49 | 13,38 | 21,58 |
| Résistance rupture (Mpa) | 20 | 29 | 28,2 | 21,5 |
| Allongement à la rupture (%) | 685 | 465 | 551 | 302 |
| I.R. = 200/100 | 1,77 | 2,60 | 2,43 | 3,11 |
| I.R. = 300/100 | 3,10 | 4,71 | 4,17 | 5,75 |
| Dureté Shore A-15s (pts) | 54 | 66 | 66 | 65 |
| Perte par abrasion 10N (mm³) | 229 | 51 | 77 | 52 |

### 5) Propriétés dynamiques des vulcanisats :

Les propriétés mécaniques sont mesurées sur un viscoanalyseur (Metravib VA3000), selon la norme ASTM D5992.

Les valeurs de facteur de perte (tan δ) et de module complexe en compression dynamique (E*) sont enregistrées sur des échantillons vulcanisés (éprouvette cylindrique de section 95 mm² et de hauteur 14 mm). L'échantillon est soumis au départ à une prédéformation de 10% puis à une déformation sinusoïdale en compression alternée de plus ou moins 2%. Les mesures sont réalisées à 60°C et à une fréquence de 10 Hz.

Les résultats, présentés dans le tableau IV, sont le module complexe en compression (E* - 60°C - 10 Hz) et le facteur de perte (tan δ - 60°C - 10 Hz).

Les valeurs du facteur de perte (tan δ) et d'amplitude de module élastique en cisaillement dynamique (ΔG') sont enregistrées sur des échantillons vulcanisés (éprouvette parallélépipédique de section 8 mm² et de hauteur 7 mm). L'échantillon est soumis à une déformation sinusoïdale en double cisaillement alternée à une température de 40°C et à une fréquence de 10 Hz. Les processus de balayage en amplitude de déformations s'effectue selon un cycle aller-retour, allant de 0,1% à 50% puis retour de 50% à 0,1%.

Les résultats présentés dans le tableau IV, sont issus du balayage en amplitude de déformations au retour et concernent la valeur maximale du facteur de perte (tan δ max retour - 40°C - 10 Hz) ainsi que l'amplitude du module élastique (ΔG' - 40°C - 10 Hz) entre les valeurs à 0, 1 % et 50% de déformation (effet Payne).

**Tableau IV**

| Référence | Témoin 1 | Témoin 2 | Témoin 3 | Exemple 2 |
|---|---|---|---|---|
| E* - 60°C - 10 Hz (MPa) | 9,4 | 9,65 | 8,60 | 7,71 |
| Tang δ - 60°C - 10Hz | 0,145 | 0,138 | 0,087 | 0,063 |
| Tang δ max retour - 40°C - 10 Hz | 0,176 | 0,187 | 0,134 | 0,092 |
| ΔG' - 40°C - 10 Hz (MPa) | 3,15 | 3,19 | 1,71 | 0,98 |

L'examen des différents tableaux II à IV montre que la composition conforme à l'invention (exemple 2) permet d'améliorer très nettement le compromis renforcement aux grandes déformations / propriétés hystérétiques par rapport à ce qui est obtenu avec les compositions témoins (témoins 1 à 3). II convient de noter en particulier que la composition de l'invention, comparée à la composition témoin 2 renforçée de noir, révèle de manière inattendue une amélioration significative de l'indice de renforcement (I.R. = M300/M100 (multiplié par 1,22)).

## Revendications

1. Utilisation :
→ d'une quantité efficace d'un système (A) de couplage (charge inorganique - élastomère) comprenant un organosilane fonctionnalisé porteur d'au moins deux fonctions notées "X" ou "Y", greffable d'une part sur l'élastomère au moyen de la fonction "X" et d'autre part sur la charge inorganique au moyen de la fonction "Y" ;
→ comme agent de couplage charge inorganique - élastomère dans les compositions de caoutchouc comprenant :
◆ (B) au moins un élastomère de type caoutchouc, naturel ou synthétique ;
◆ (C) une charge inorganique à titre de charge renforçante ;
◆ (D) tout ou partie des autres constituants ou additifs choisis parmi : un (ou des) agent(s) de vulcanisation (D1), éventuellement un (ou des) accélérateur(s) de vulcanisation (D2), éventuellement un (ou des) activateur(s) de vulcanisation (D3), éventuellement une (ou des) charge(s) renforçante(s) non-blanche(s) (D4), éventuellement une (ou des) charge(s) inorganique(s) peu ou non renforçante(s) (D5), éventuellement un (ou des) agent(s) protecteur(s) (D6), éventuellement un (ou des) agent(s) de plastification (D7), et des mélanges de ces espèces ;
→ ladite utilisation étant **caractérisée en ce que** :
+ le système de couplage (A) consiste dans une association particulière résidant dans la combinaison des ingrédients (A1) et (A2) suivants :
- (A1) étant au moins un agent de couplage choisi parmi les produits de formule :
- (C₂H₅O)₃Si-(CH₂)₃-NH-CO-N=N-COOC₂H₅ (A1-1)
- les mélanges des espèces (A1-1) avec les espèces (A1-1') et (A1-1") suivantes :
[(CH₃)₃SiO_{1/2}] [(C₂H₅O)₂{(CH₂)₃-NH-CO-N=N-COOC₂H₅}SiO_{1/2}] (A1-1')
[(CH₃)₃SiO_{1/2}]₂ [(C₂H₅O){(CH₂)₃-NH-CO-N=N-COOC₂H₅}SiO_{2/2}] (A1-1")
- (CH₃)₂(C₂H₅O)Si-(CH₂)₃-NH-CO-N=N-COOC₂H₅ (A1-2)
- (CH₃)(CH₃O)₂Si-(CH₂)₃-NH-CO-N=N-COOCH₃ (A1-3)
- (CH₃)₂(OH)Si-(CH₂)₃-NH-CO-N=N-COOCH₃ (A1-4)
- (C₂H₅)₂(OH)Si-(CH₂)₃-NH-CO-N=N-COOC₂H₅ (A1-5)
- (CH₃)(CH₃O)₂Si-(CH₂)₃-CO-N=N-COOCH₃ (A1-6)
- (CH₃)₂(OH)Si-(CH₂)₃-CO-N=N-COOCH₃ (A1-7)
- (C₂H₅)₂(OH)Si-(CH₂)₃-CO-N=N-COOC₂H₅ (A1-8)
- (A2) étant au moins un agent de recouvrement de la charge renforçante consistant dans un composé, comprenant dans sa structure la seule fonction "Y", qui est capable de se lier physiquement et/ou chimiquement à la charge inorganique et est susceptible, grâce à une amélioration de la dispersion de la charge dans la matrice de caoutchouc et à un abaissement de la viscosité des compositions, d'améliorer la faculté de mise en oeuvre des compositions à l'état cru, ledit composé étant un polyorganosiloxane de formule : 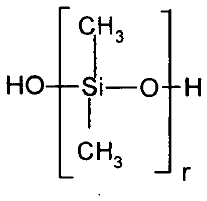 avec r ayant une valeur allant de 3 à 10,
+ ledit système de couplage (A) est incorporé dans des compositions de caoutchouc à base d'élastomères isopréniques.

2. Compositions d'élastomère(s) **caractérisées en ce qu'**elles comprennent :
(B) au moins un élastomère isoprénique,
(C) une charge inorganique renforçante, et
(A) une quantité adéquate du système de couplage consistant dans l'association particulière résidant dans la combinaison des ingrédients (A1) et (A2) définis dans la revendication 1.

3. Compositions selon la revendication 2, **caractérisées en ce qu'**elles comprennent (les parties étant données en poids) :
• pour 100 parties d'élastomère(s) isoprénique(s),
• de 10 à 200 parties de charge inorganique (C),
• une quantité de combinaisons (A1) + (A2) qui apporte dans chaque composition :
- 0,5 à 15 parties d'ingrédient (A1), et
- 0,5 à 10 parties d'ingrédient (A2).

4. Compositions selon la revendication 3, **caractérisées en ce qu'**elles comprennent (les parties étant données en poids) :
• pour 100 parties d'élastomère(s) isoprénique(s),
• de 30 à 150 parties de charge inorganique (C),
• une quantité de combinaisons (A1) + (A2) qui apporte dans chaque composition :
- 1 à 10 parties d'ingrédient (A1), et
- 0,8 à 8 parties d'ingrédient (A2).

5. Compositions selon l'une des revendications 2 à 4, **caractérisées en ce que** le (ou les) élastomère(s) isopréniques(s) est (sont) choisi(s) parmi :
(1) les polyisoprènes de synthèse obtenus par homopolymérisation de l'isoprène ou méthyl-2 butadiène-1,3 ;
(2) les polyisoprènes de synthèse obtenus par copolymérisation de l'isoprène avec un ou plusieurs monomères insaturés éthyléniquement choisis parmi :
- (2.1) les monomères diènes conjuguées, autres que l'isoprène, ayant de 4 à 22 atomes de carbone ;
- (2.2) les monomères vinyles aromatiques ayant de 8 à 20 atomes de carbone ;
- (2.3) les monomères nitriles vinyliques ayant de 3 à 12 atomes de carbone ;
- (2.4) les monomères esters acryliques dérivés de l'acide acrylique ou de l'acide méthacrylique avec des alcanols ayant de 1 à 12 atomes de carbone ;
- (2.5) un mélange de plusieurs des monomères précités (2.1) à (2.4) entre eux ; les polyisoprènes copolymères contenant entre 99 % et 20 % en poids d'unités isopréniques et entre 1 % et 80 % en poids d'unités diéniques, vinyles aromatiques, nitriles vinyliques et/ou esters acryliques, et consistant par exemple dans le poly(isoprène-butadiène), le poly(isoprène-styrène) et le poly(isoprène-butadiène-styrène) ;
(3) le caoutchouc naturel ;
(4) les copolymères obtenus par copolymérisation d'isobutène et d'isoprène (caoutchouc butyle), ainsi que les versions halogénées, en particulier chlorées ou bromée, de ces copolymères ;
(5) un mélange de plusieurs des élastomères précités (1) à (4) entre eux ;
(6) un mélange contenant une quantité majoritaire allant de 51 % à 99,5 % en poids d'élastomère précité (1) ou (3) et une quantité minoritaire allant de 49 % à 0,5 % en poids) d'un ou plusieurs élastomères diéniques autres qu'isopréniques.

6. Compositions selon la revendication 5, **caractérisées en ce que** l'on fait appel à un ou plusieurs élastomères isopréniques choisis parmi : (1) les polyisoprènes de synthèse homopolymères ; (2) les polyisoprènes de synthèse copolymères consistant dans le poly(isoprène-butadiène), le poly(isoprène-styrène) et le poly(isoprène-butadiène-styrène) ; (3) le caoutchouc naturel ; (4) le caoutcouc butyle ; (5) un mélange des élastomères précités (1) à (4) entre eux ; (6) un mélange contenant une quantité majoritaire d'élastomère précité (1) ou (3) et une quantité minoritaire d'élastomère diénique autre qu'isoprénique consistant dans le polybutadiène, le polychloroprène, le poly(butadiène-styrène), le poly(butadiène-acrylonitrile) et un terpolymère (éthylène-propylène-diène monomère non conjugué).

7. Compositions selon l'une des revendications 2 à 6, **caractérisées en ce que** la charge inorganique renforçante consiste dans de la silice, prise seule ou en mélange avec de l'alumine.

8. Compositions selon la revendication 7, **caractérisées en ce que** :
■ la silice est une silice précipitée, par exemple présentant une surface spécifique BET inférieure ou égale à 450 m²/g,
■ l'alumine est une alumine hautement dispersible, par exemple présentant une surface spécifique BET de 30 à 400 m²/g et un taux élevé de fonctions réactives de surface Al-OH.

9. Compositions selon l'une des revendications 2 à 8, **caractérisées en ce qu'**elles contiennent en outre tout ou partie d'autres constituants ou additifs auxiliaires comprenant :
■ s'agissant du système de vulcanisation :
- (D1) : à titre obligatoire, des agents de vulcanisation choisis parmi le soufre ou des composés donneurs de soufre ;
- (D2) à titre facultatif, des accélérateurs de vulcanisation ;
- (D3) : à titre facultatif, des activateurs de vulcanisation ;
■ s'agissant d'autre(s) additif(s) :
- (D4) : à titre facultatif, une charge renforçante conventionnelle consistant dans le noir de carbone ;
- (D5) : à titre facultatif, une charge blanche conventionnelle peu ou non renforçante ;
- (D6) : à titre facultatif, des agents protecteurs ;
- (D7) : à titre facultatif, des agents de plastification.

10. Procédé de préparation des compositions d'élastomère(s) isoprénique(s) selon l'une des revendications 2 à 9, **caractérisé en ce qu'**il consiste à mettre en oeuvre les deux phases 1 et 2 suivantes :
• phase 1 : on introduit et malaxe dans un mélangeur interne, en une ou plusieurs étapes, tous les ingrédients nécessaires, à l'exception généralement du (ou des) agent(s) de vulcanisation, en opérant à une température de 40 à 200°C ;
• phase 2 : puis le mélange ainsi obtenu est repris sur un mélangeur externe et on y ajoute alors le (ou les) agent(s) de vulcanisation et éventuellement un ou plusieurs autre(s) ingrédient(s), en opérant à une température plus basse, inférieure à 120°C.

11. Procédé selon la revendication 10, **caractérisé en ce que** :
• l'agent de recouvrement (A2) est introduit en totalité au cours de la phase 1 en même temps que la charge inorganique ;
• l'agent de couplage (A1) est :
- soit introduit en totalité au cours de la phase 1,
- soit introduit en totalité au cours de la phase 2,
- soit fractionné entre les deux phases 1 et 2, la première fraction incorporée en phase 1 correspondant à une proportion de 10 à 80% en poids, la seconde fraction incorporée en phase 2 correspondant à une proportion de 90 à 20% en poids.

12. Articles en élastomère(s), **caractérisés en ce qu'**ils possèdent un corps comprenant une composition selon l'une des revendications 2 à 9.

13. Articles selon la revendication 12, **caractérisés en ce qu'**ils consistent dans des supports de moteurs, des semelles de chaussures, des galets de téléphériques, des joints d'appareillages électroménagers et des gaines de câbles.

## Patentansprüche

1. Verwendung:
→ einer wirksamen Menge eines Kupplungssystems (A) (für anorganischen Füllstoff - Elastomer), umfassend ein funktionalisiertes Organosilan mit mindestens zwei Funktionen "X" oder "Y", die einerseits über die Funktion "X" auf das Elastomer und andererseits über die Funktion "Y" auf den anorganischen Füllstoff aufgepfropft werden kann;
→ als Mittel zur Kupplung von anorganischem Füllstoff und Elastomer in Kautschukzusammensetzungen, umfassend:
◆ (B) mindestens ein Elastomer vom Naturkautschuk- oder Synthesekautschuk-Typ;
◆ (C) einen anorganischen Füllstoff als verstärkenden Füllstoff;
◆ (D) die Gesamtheit oder einen Teil der anderen Bestandteile oder Additive, ausgewählt aus: einem (oder mehreren) Vulkanisationsmittel(n) (D1), gegebenenfalls einem (oder mehreren) Vulkanisationsbeschleuniger(n) (D2), gegebenenfalls einem (oder mehreren) Vulkanisationsaktivator(en) (D3), gegebenenfalls einem (oder mehreren) nicht-weißen verstärkenden Füllstoff(en) (D4), gegebenenfalls einem (oder mehreren) wenig oder nicht verstärkenden Füllstoff(en) (D5), gegebenenfalls einem (oder mehreren) Schutzmittel(n) (D6), gegebenenfalls einem (oder mehreren) Weichmacher(n) (D7) und Mischungen dieser Spezies;
→ wobei die Verwendung **dadurch gekennzeichnet ist, dass**:
+ das Kupplungssystem (A) aus einer speziellen Kombination besteht, die in der Kombination der folgenden Bestandteile (A1) und (A2) besteht:
- wobei (A1) mindestens ein Kupplungsmittel ist, das aus den Produkten der folgenden Formel ausgewählt ist:
- (C₂H₅O)₃Si-(CH₂)₃-NH-CO-N=N-COOC₂H₅ (A1-1)
- Mischungen der Spezies (A1-1) mit den folgenden Spezies (A1-1') und (A1-1") :
[(CH₃)₃SiO_{1/2}] [(C₂H₅O)₂{(CH₂)₃-NH-CO-N=N-COOC₂H₅}SiO_{1/2}] (A1-1')
[(CH₃)₃SiO_{1/2}]₂[(C₂H₅O){(CH₂)₃-NH-CO-N=N-COOC₂H₅}SiO_{2/2}] (A1-1")
- (CH₃)₂(C₂H₅O)Si- (CH₂)₃-NH-CO-N=N-COOC₂H₅ (A1-2)
- (CH₃)(CH₃O)₂Si-(CH₂)₃-NH-CO-N=N-COOCH₃ (A1-3)
- (CH₃)₂(OH)Si-(CH₂)₃-NH-CO-N=N-COOCH₃ (A1-4)
- (C₂H₅)₂(OH)Si- (CH₂)₃-NH-CO-N=N-COOC₂H₅ (A1-5)
- (CH₃)(CH₃O)₂Si-(CH₂)₃-CO-N=N-COOCH₃ (A1-6)
- (CH₃)₂(OH)Si- (CH₂)₃-CO-N=N-COOCH₃ (A1-7)
- (C₂H₅)₂(OH)Si-(CH₂)₃-CO-N=N-COOC₂H₅ (A1-8)
- wobei (A2) mindestens ein Mittel zur Bedeckung des verstärkenden Füllstoffs ist, das aus einer Verbindung besteht, die in ihrer Struktur die einzige Funktion "Y" umfasst, die physikalisch und/oder chemisch an den anorganischen Füllstoff binden kann und dank einer Verbesserung der Dispergierung des Füllstoffs in der Kautschukmatrix und einer Herabsetzung der Viskosität der Zusammensetzungen dazu in der Lage ist, die Verwendbarkeit der Zusammensetzungen im Rohzustand zu verbessern, wobei die Verbindung ein Polyorganosiloxan der folgenden Formel ist: 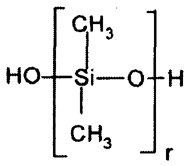 wobei r einen Wert im Bereich von 3 bis 10 hat,
+ das Kupplungssystem (A) in Kautschukzusammensetzungen auf Basis von Isoprenelastomeren eingearbeitet wird.

2. Elastomerzusammensetzungen, **dadurch gekennzeichnet, dass** sie:
(B) mindestens ein Isoprenelastomer,
(C) einen verstärkenden anorganischen Füllstoff und
(A) eine hinreichende Menge des Kupplungssystems, das aus der speziellen Kombination besteht, die in der Kombination der in Anspruch 1 definierten Bestandteile (A1) und (A2) besteht,
umfassen.

3. Zusammensetzungen nach Anspruch 2, **dadurch gekennzeichnet, dass** sie:
• pro 100 Teile Isoprenelastomer(e)
• 10 bis 200 Teile anorganischen Füllstoff (C),
• eine Menge von Kombinationen (A1) + (A2), die in jeder Zusammensetzung:
- 0,5 bis 15 Teile Bestandteil (A1) und
- 0,5 bis 10 Teile Bestandteil (A2) bereitstellt,
umfassen (wobei die Teileangaben sich auf das Gewicht beziehen).

4. Zusammensetzungen nach Anspruch 3, **dadurch gekennzeichnet, dass** sie:
• pro 100 Teile Isoprenelastomer(e)
• 30 bis 150 Teile anorganischen Füllstoff (C),
• eine Menge von Kombinationen (A1) + (A2), die in jeder Zusammensetzung:
- 1 bis 10 Teile Bestandteil (A1) und
- 0,8 bis 8 Teile Bestandteil (A2) bereitstellt,
umfassen (wobei die Teileangaben sich auf das Gewicht beziehen).

5. Zusammensetzungen nach einem der Ansprüche 2 bis 4, **dadurch gekennzeichnet, dass** das (oder die) Isoprenelastomer(e) aus:
(1) synthetischen Polyisoprenen, erhalten durch Homopolymerisation von Isopren oder 2-Methyl-1,3-butadien;
(2) synthetischen Polyisoprenen, erhalten durch Copolymerisation von Isopren mit einem oder mehreren ethylenisch ungesättigten Monomeren, ausgewählt aus:
- (2.1) konjugierten Dienmonomeren, die von Isopren verschieden sind und 4 bis 22 Kohlenstoffatome enthalten;
- (2.2) vinylaromatischen Monomeren mit 8 bis 20 Kohlenstoffatomen;
- (2.3) Vinylnitrilmonomeren mit 3 bis 12 Kohlenstoffatomen;
- (2.4) Acrylsäureestermonomeren, die sich von Acrylsäure oder Methacrylsäure mit Alkanolen mit 1 bis 12 Kohlenstoffatomen ableiten;
- (2.5) einer Mischung mehrerer der oben aufgeführten Monomere (2.1) bis (2.4) miteinander;
wobei die Polyisopren-Copolymere zwischen 99 und 20 Gew.-% Isopren-Einheiten und zwischen 1 und 80 Gew.-% Dien-Einheiten, aromatische Vinyl-Einheiten, Vinylnitril-Einheiten und/oder Acrylsäureester-Einheiten enthalten und beispielsweise aus Poly(isopren-butadien), Poly(isopren-styrol) und Poly(isopren-butadien-styrol) bestehen;
(3) Naturkautschuk;
(4) Copolymeren, erhalten durch Copolymerisation von Isobuten und Isopren (Butylkautschuk), sowie halogenierten Versionen, insbesondere chlorierten oder bromierten Versionen, dieser Copolymere;
(5) einer Mischung mehrerer der oben aufgeführten Elastomere (1) bis (4) miteinander;
(6) einer Mischung, die eine Hauptmenge im Bereich von 51 bis 99,5 Gew.-% des oben aufgeführten Elastomers (1) oder (3) und eine Nebenmenge im Bereich von 49 bis 0,5 Gew.-% eines oder mehrerer Dienelastomere, die von Isoprenelastomeren verschieden sind, enthält;
ausgewählt ist (sind).

6. Zusammensetzungen nach Anspruch 5, **dadurch gekennzeichnet, dass** ein oder mehrere Isoprenelastomere, ausgewählt aus: (1) synthetischen Polyisopren-Homopolymeren; (2) synthetischen Polyisopren-Copolymeren, bestehend aus Poly(isopren-butadien), Poly(isopren-styrol) und Poly(isopren-butadien-styrol); (3) Naturkautschuk; (4) Butylkautschuk; (5) einer Mischung der oben aufgeführten Elastomere (1) bis (4) miteinander; (6) einer Mischung, die eine Hauptmenge des oben aufgeführten Elastomers (1) oder (3) und eine Nebenmenge von Dienelastomer, das von Isoprenelastomer verschieden ist und aus Polybutadien, Polychloropren, Poly(butadien-styrol), Poly-(butadien-acrylnitril) und einem Terpolymer (nicht konjugiertem Ethylen-Propylen-Dien-Monomer) besteht, verwendet werden.

7. Zusammensetzungen nach einem der Ansprüche 2 bis 6, **dadurch gekennzeichnet, dass** der verstärkende anorganische Füllstoff aus Kieselsäure, alleine oder als Mischung mit Aluminiumoxid, besteht.

8. Zusammensetzungen nach Anspruch 7, **dadurch gekennzeichnet, dass**:
• es sich bei der Kieselsäure um eine Fällungskieselsäure handelt, beispielsweise mit einer spezifischen BET-Oberfläche kleiner gleich 450 m²/g,
• es sich bei dem Aluminiumoxid um ein hochdispergierbares Aluminiumoxid handelt, beispielsweise mit einer spezifischen BET-Oberfläche von 30 bis 400 m²/g und einem hohen Gehalt an reaktiven Al-OH-Oberflächenfunktionen.

9. Zusammensetzungen nach einem der Ansprüche 2 bis 8, **dadurch gekennzeichnet, dass** sie außerdem die Gesamtheit oder einen Teil anderer Hilfsbestandteile oder -additive enthalten, die Folgendes umfassen:
• was das Vulkanisationssystem betrifft:
- (D1): obligatorisch Vulkanisationsmittel, die aus Schwefel oder Schwefeldonatorverbindungen ausgewählt sind;
- (D2): gegebenenfalls Vulkanisationsbeschleuniger;
- (D3): gegebenenfalls Vulkanisationsaktivatoren;
• was andere(s) Additiv(e) angeht:
- (D4): gegebenenfalls einen herkömmlichen verstärkenden Füllstoff, der aus Ruß besteht;
- (D5): gegebenenfalls einen wenig oder nicht verstärkenden herkömmlichen weißen Füllstoff;
- (D6): gegebenenfalls Schutzmittel;
- (D7): gegebenenfalls Weichmacher.

10. Verfahren zur Herstellung von Isoprenelastomerzusammensetzungen nach einem der Ansprüche 2 bis 9, **dadurch gekennzeichnet, dass** es aus der Durchführung der folgenden beiden Phasen 1 und 2 besteht:
• Phase 1: alle notwendigen Bestandteile, im Allgemeinen mit Ausnahme des (oder der) Vulkanisationsmittel(s), werden in einem oder mehreren Schritten in einen Innenmischer eingetragen und gemischt, wobei bei Temperaturen von 40 bis 200°C gearbeitet wird;
• Phase 2: dann wird die so erhaltene Mischung in einem Außenmischer aufgenommen und mit dem (oder den) Vulkanisationsmittel(n) und gegebenenfalls einem oder mehreren anderen Bestandteil(en) versetzt, wobei bei einer niedrigeren Temperatur, die unter 120°C liegt, gearbeitet wird.

11. Verfahren nach Anspruch 10, **dadurch gekennzeichnet, dass**:
• das Bedeckungsmittel (A2) im Lauf der Phase 1 zur gleichen Zeit wie der anorganische Füllstoff in seiner Gesamtheit eingetragen wird;
• das Kupplungsmittel (A1):
- entweder im Lauf der Phase 1 in seiner Gesamtheit eingetragen wird
- oder im Lauf der Phase 2 in seiner Gesamtheit eingetragen wird
- oder zwischen den beiden Phasen 1 und 2 aufgeteilt wird, wobei die in Phase 1 eingearbeitete erste Fraktion einem Anteil von 10 bis 80 Gew.-% entspricht und die in Phase 2 eingearbeitete zweite Fraktion einem Anteil von 90 bis 20 Gew.-% entspricht.

12. Elastomerartikel, **dadurch gekennzeichnet, dass** sie einen Körper besitzen, der eine Zusammensetzung nach einem der Ansprüche 2 bis 9 umfasst.

13. Artikel nach Anspruch 12, **dadurch gekennzeichnet, dass** sie aus Motorhalterungen, Schuhsohlen, Rollen für Seilbahnen, Dichtungen für Elektrohaushaltsgeräte und Kabelmänteln bestehen.

## Claims

1. Use:
→ of an effective amount of a coupling system (A) (mineral filler-elastomer) comprising a functionalized organosilane bearing at least two functions noted "X" or "Y", which may be grafted on the one hand onto the elastomer by means of the function "X", and on the other hand onto the mineral filler by means of the function "Y";
→ as mineral filler-elastomer coupling agent in rubber compositions comprising:
◆ (B) at least one elastomer of natural or synthetic rubber type;
◆ (C) an mineral filler as reinforcing filler;
◆ (D) all or part of the other constituents or additives chosen from: one (or more) curing agent(s) (D1), optionally one (or more) curing accelerator(s) (D2), optionally one (or more) curing activator(s) (D3), optionally one (or more) non-white reinforcing filler(s) (D4), optionally one (or more) non-reinforcing or sparingly reinforcing mineral filler(s) (D5), optionally one (or more) protecting agent(s) (D6), optionally one (or more) plasticizer(s) (D7), and mixtures of these species;
→ said use being **characterized in that**:
+ the coupling system (A) consists of a particular combination residing in the combination of the ingredients (A1) and (A2) below:
(A1) being at least one coupling agent chosen from the products of formula:
**- (C₂H₅O)₃Si-(CH₂)₃-NH-CO-N=N-COOC₂H₅** (A1-1)
- mixtures of species (A1-1) with the following species (A1-1') and (A1-1")
**[(CH₃)₃SiO_{1/2}] [(C₂H₅O)₂{(CH₂)₃-NH-CO-N=N-COOC₂H₅)SiO_{1/2}]** (A1-1')
**[(CH₃)₃SiO_{1/2}]₂[(C₂H₅O){(CH₂)₃-NH-CO-N=N-COOC₂H₅}SiO_{2/2}]** (A1-1")
**- (CH₃)₂(C₂H₅O)Si-(CH₂)₃-NH-CO-N=N-COOC₂H₅** (A1-2)
**-(CH₃)(CH₃O)₂Si-(CH₂)₃-NH-CO-N=N-COOCH₃** (A1-3)
**- (CH₃)₂(OH)Si-(CH₂)₃-NH-CO-N=N-COOCH₃** (A1-4)
**- (C₂H₅)₂(OH)Si-(CH₂)₃-NH-CO-N=N-COOC₂H₅** (A1-5)
**- (CH₃)(CH₃O)₂Si-(CH₂)₃-CO-N=N-COOCH₃** (A1-6)
**- (CH₃)₂(OH)Si-(CH₂)₃-CO-N=N-COOCH₃** (A1-7)
**-(C₂H₅)₂(OH)Si-(CH₂)₃-CO-N=N-COOC₂H₅** (A1-8) ;
- (A2) being at least one agent for covering the reinforcing filler consisting in a compound, comprising in its structure the sole function "Y", which is capable of physically and/or chemically bonding to the mineral filler and is capable, by means of improving the dispersion of the filler in the rubber matrix and of lowering the viscosity of the compositions, of improving the ease of use of the compositions in crude form, said compound being a polyorganosiloxane of formula: 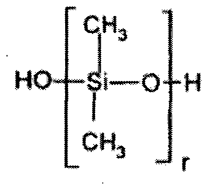 with r having a value ranging from 3 to 10;
+ said coupling system (A) is incorporated into rubber compositions based on isoprene elastomers.

2. Elastomeric compositions, **characterized in that** they comprise:
(B) at least one isoprene elastomer,
(C) a reinforcing mineral filler, and
(A) an adequate amount of the coupling system consisting of the particular combination residing in the combination of ingredients (A1) and (A2) defined in Claim 1.

3. Compositions according to Claim 2, **characterized in that** they comprise (the parts being given on a weight basis):
• per 100 parts of isoprene elastomer(s),
• from 10 to 200 parts of mineral filler (C),
• an amount of combinations (A1)+(A2) that provides in each composition:
- 0.5 to 15 parts of ingredient (A1), and
- 0.5 to 10 parts of ingredient (A2).

4. Compositions according to Claim 3, **characterized in that** they comprise (the parts being given on a weight basis):
• per 100 parts of isoprene elastomer(s),
• from 30 to 150 parts of mineral filler (C),
• an amount of combinations (A1)+(A2) that provides in each composition:
- 1 to 10 parts of ingredient (A1), and
- 0.8 to 8 parts of ingredient (A2).

5. Composition according to one of Claims 2 to 4, **characterized in that** the isoprene elastomer(s) is (are) chosen from:
(1) the synthetic polyisoprenes obtained by homopolymerization of isoprene or 2-methyl-1,3-butadiene;
(2) the synthetic polyisoprenes obtained by copolymerization of isoprene with one or more ethylenically unsaturated monomers chosen from:
- (2.1) conjugated diene monomers, other than isoprene, containing from 4 to 22 carbon atoms;
- (2.2) aromatic vinyl monomers containing from 8 to 20 carbon atoms;
- (2.3) vinyl nitrile monomers containing from 3 to 12 carbon atoms;
- (2.4) acrylic ester monomers derived from acrylic acid or methacrylic acid with alkanols containing from 1 to 12 carbon atoms;
- (2.5) a mixture of several of the abovementioned monomers (2.1) to (2.4);
the polyisoprene copolymers containing between 99% and 20% by weight of isoprene units and between 1% and 80% by weight of diene, aromatic vinyl, vinyl nitrile and/or acrylic ester units, and consisting, for example, of poly(isoprene-butadiene), poly(isoprene-styrene) and poly(isoprene-butadiene-styrene);
(3) natural rubber;
(4) the copolymers obtained by copolymerization of isobutene and isoprene (butyl rubber), and also the halogenated versions, in particular the chlorinated or brominated versions, of these copolymers;
(5) a mixture of several of the abovementioned elastomers (1) to (4);
(6) a mixture containing a major amount ranging from 51% to 99.5% by weight of abovementioned elastomer (1) or (3) and a minor amount ranging from 49% to 0.5% by weight of one or more diene elastomers other than isoprene elastomers.

6. Compositions according to Claim 5, **characterized in that** use is made of one or more isoprene elastomers chosen from: (1) synthetic polyisoprenes homopolymers; (2) synthetic polyisoprene copolymers consisting of poly(isoprene-butadiene), poly(isoprene-styrene) and poly(isoprene-butadiene-styrene); (3) natural rubber; (4) butyl rubber; (5) a mixture of the abovementioned elastomers (1) to (4); (6) a mixture containing a major amount of abovementioned elastomer (1) or (3) and a minor amount of diene elastomer other than isoprene elastomer consisting of polybutadiene, polychloroprene, poly(butadiene-styrene), poly(butadiene-acrylonitrile) and a terpolymer (non-conjugated ethylene-propylene-diene monomer).

7. Compositions according to one of Claims 2 to 6, **characterized in that** the reinforcing mineral filler consists of silica, taken alone or as a mixture with alumina.

8. Compositions according to Claim 7, **characterized in that**:
■ the silica is a precipitated silica, for example having a BET specific surface area of less than or equal to 450 m²/g,
■ the alumina is a highly dispersible alumina, for example having a BET specific surface area of from 30 to 400 m²/g and a high content of reactive surface Al-OH functions.

9. Compositions according to one of Claims 2 to 8, **characterized in that** they also contain all or some other auxiliary additives or constituents comprising:
■ as regards the curing system:
- (D1): mandatorily, curing agents chosen from sulfur and sulfur-donating compounds;
- (D2): optionally, curing accelerators;
- (D3): optionally, curing activators;
■ as regards other additive(s):
- (D4): optionally, a conventional reinforcing filler consisting of carbon black;
- (D5): optionally, a sparingly reinforcing or non-reinforcing conventional white filler;
- (D6): optionally, protecting agents;
- (D7): optionally, plasticizers.

10. Process for preparing the isoprene elastomer compositions according to one of Claims 2 to 9, **characterized in that** it consists in performing the following two phases 1 and 2:
• phase 1: all the necessary ingredients, with the exception generally of the curing agent(s), are introduced into and blended in an internal mixer, in one or more steps, working at a temperature of from 40 to 200°C;
• phase 2: the mixture thus obtained is then taken up in an external mixer and the curing agent(s) and optionally one or more other ingredient(s) is (are) then added thereto, working at a lower temperature, below 120°C.

11. Process according to Claim 10, **characterized in that**:
• the covering agent (A2) is introduced in total during phase 1 at the same time as the mineral filler;
• the coupling agent (A1) is:
- either totally introduced during phase 1,
- or totally introduced during phase 2,
- or split between the two phases 1 and 2, the first fraction incorporated in phase 1 corresponding to a proportion of from 10% to 80% by weight, the second fraction incorporated in phase 2 corresponding to a proportion of from 90% to 20% by weight.

12. Elastomeric articles, **characterized in that** they have a body comprising a composition according to one of Claims 2 to 9.

13. Articles according to Claim 12, **characterized in that** they consist of engine supports, shoe soles, rollers for cable cars, seals for electrical household appliances and cable sheaths.
